# EUROPEAN PATENT SPECIFICATION

(11) **EP 1 540 023 B1**
(45) Date of publication and mention of the grant of the patent: **02.04.2008**
(21) Application number: 03788903.7
(22) Date of filing: 11.09.2003
(51) Int. Cl.: C22B 1/242, C22B 1/243, C22B 1/244, C10L 5/10, C10L 5/12, C10L 5/14

(54) **PROCESS FOR AGGLOMERATING PARTICULATE MATERIAL**
VERFAHREN ZUM AGGLOMERIEREN TEILCHENFÖRMIGEN MATERIALS
PROCEDE D'AGGLOMERATION DE MATERIAU PARTICULAIRE

(30) Priority: 18.09.2002 US 411611 P
(43) Date of publication of application: 15.06.2005
(73) Proprietor: Akzo Nobel N.V., 6824 BM Arnhem (NL)
(72) Inventor: SCHMITT, James, John, Littleton, CO 80125 (US); BASDAG, Ali, Hidd (BH)
(74) Representative: Schalkwijk, Pieter Cornelis
(86) International application number: PCT/EP2003/010208
(87) International publication number: WO 2004/031421

(56) References cited:
- WO-A-99/60175
- US-A- 4 288 245
- DATABASE WPI Section Ch, Week 199024 Derwent Publications Ltd., London, GB; Class J01, AN 1990-182909 XP002275890 -& SU 1 502 640 A (BAIKOV METALLURGY INST) , 23 August 1989 (1989-08-23)
- DATABASE WPI Section Ch, Week 200323 Derwent Publications Ltd., London, GB; Class A97, AN 2003-230211 XP002275891 -& CN 1 153 218 A (UNIV BEIJING SCI & TECH), 2 July 1997 (1997-07-02)
- DATABASE WPI Section Ch, Week 199802 Derwent Publications Ltd., London, GB; Class M24, AN 1998-009746 XP002275892 & CN 1 133 345 A (ZHU C), 16 October 1996 (1996-10-16)
- DATABASE WPI Section Ch, Week 199323 Derwent Publications Ltd., London, GB; Class M24, AN 1993-187388 XP002275893 -& SU 1 740 463 A (AS USSR URALS SECT METAL INST), 15 June 1992 (1992-06-15)

## Description

The invention relates to a method for improving/increasing the preheat strength of agglomerates or pellets by agglomerating/pelletizing with a compound effective to increase the pre-heat strength thereof.

The inventive method is applicable in any agglomerating/pelletizing process, irrespective of whether an organic or an inorganic binder is used. However, the pellet's preheat strength has always been a particular problem with organic binders. It is a weak point in the production of iron ore pellets, particularly on a grate kiln or in a shaft furnace.

Many processes for the agglomeration of particles, especially metallic particles, are known in the art. In the mining industry it is common practice to agglomerate or pelletize finely ground beneficiated mineral ore concentrate to facilitate processing and handling/shipping of the ore. After the mineral ore has been mined, it is frequently wet ground to liberate and separate unwanted gangue minerals from the desired material, e.g. iron in the case of iron ore. The processed wet ground ore is screened to remove large particles which can be recycled for further grinding. The screened fines are then vacuum filtered to reduce the moisture content to an acceptable range for pelletization. The filtered mineral ore is known in the art as "concentrate". A second process involves "dry grinding" and beneficiation of the mineral ore, in which case the moisture required for pelletization is added afterwards.

After beneficiation, a binding agent is added to the wetted mineral ore concentrate and the binder/mineral ore composite is conveyed to a balling drum or other means for pelletizing the ore. The binding agent serves to hold or bind the mineral ore together, so that the individual agglomerates can be transported without losing their integrity en route to further processing and induration.

Following the balling drum operation, the pellets are formed, but they are still wet. These wet pellets are commonly referred to as "green pellets" or "green balls". These green pellets are thereafter transported to a kiln and heated in stages to an end temperature of about 1,300-1,350°C. The ability of the pellets to withstand breakage throughout processing can be approximated by performing standard tests that measure the strength the pellets will have/need at each stage of processing.

Green (wet) pellet strength is a measure of the pellets' wet strength immediately after their formation in the agglomeration process. It represents the green pellets' ability to survive the forces and pressures exerted on them as they are transported and loaded into the induration furnace. There are two methods for determining wet green pellet strength. 1) The Wet Drop Number, which is the average number of drops that a pellet can survive without cracking when being dropped to a steel plate from a height of 0.46 m (18 inches) and 2) The Wet Compressive Strength, which measures the average amount of pressure a green pellet can withstand during mechanical compression before it breaks.

Dry pellet strength is often measured at this stage by collecting wet green pellets before they are loaded into the furnace, and drying them in the laboratory at a lower temperature of 100-105°C for 2 hours in the lab so that the binder stays intact. Their strength is measured by subjecting the dried pellets to compressive forces. This strength approximates the pellets' ability to withstand being jostled and compressed on the way to the preheat zone.
The dry pellet strength of dried green pellets does not have much significance in connection with an organic binder, because in plant practice the binder is subjected to higher temperatures (400-600°C), which are usually well above the ignition temperature of the organic binder. Consequently, the organic binder bums off during induration in the plant, leaving nothing to hold the agglomerate together. Hence the reason for measuring dry pellet strength in the laboratory after heating at lower temperatures than those used in actual production processes. Dry pellet strength is of significance when bentonite is used, because the binding silica remains in the pellets and does not bum off as organic binders do.

In the pelletizing process, the wet green pellets are loaded into the furnace for further processing. The moisture in the pellets is removed by induration at temperatures normally between 400-600°C.

Following drying in the furnace, the pellets are transported to the preheat zone. This is an additional heating stage to further increase the pellets' hardness before they are transported to the kiln and/or final firing stage. Heating generally occurs at 900-1,200°C to bind the pellet together (e.g. to oxidize magnetite or crystallize hematite).

In the preheat zone, heat and oxidation are used to fuse the fine iron ore grains of the pellet together, strengthening the agglomerates. Dust and chips (lower tumble indexes) result if the grains do not bind sufficiently. Pellet manufacturers would desire a strength enhancing additive at this crucial stage, but it is undesirable to include certain additives in an attempt to increase the preheat strength of the agglomerates, because they can close off the pores inside the pellet. Iron ore pellets have naturally occurring pores inside the pellet after induration which function as pathways for the reducing gases in the steel making process. Binders such as beritonite block many of the pores and pathways, hindering the reducibility process. Many pellet producers opt to indurate the pellets longer or at higher temperatures to try and increase their strength; but this too seals off porosity, affecting the efficiency of the steel making processes. Furthermore, such measures render the pelletizing process less attractive economically.

From the preheat zone, the pellets are dropped 10-15 feet (3 - 4.6 m) from the grate to the kiln. This Is where the preheat strength is needed to prevent the pellets from chipping and breaking apart into dust particles.

To measure the preheat strength of the pellets, hot pellets (about 1,000°C) are removed from the preheat section of the furnace and quenched in a nitrogen atmosphere to halt any further oxidation or recrystallization and to cool the pellets. Once they are cooled, the pellets are subjected to compressive forces until they fracture and their peak strength (preheat strength) is recorded.

In addition, the present inventors have tested the durability of the pellets by designing two different tumble tests. The first procedure involved placing 500 grams of pellets Inside a standard ISO Tumble Tester and rotating the pellet charge for 200 revolutions. The pellets were subsequently screened on a ¼" (0.63 mm) screen to remove any chips or breakage that occurred and the percentage of pellets retained on the ¼" screen was recorded.

A second, less aggressive test was developed using a Linder reducibility apparatus. 650 grams of whole pellets were placed inside this small steel vessel and allowed to rotate for 5 minutes. As with the above-mentioned test, the fines were screened off and the resulting amount of pellets retained on the ¼" screen was reported as a percentage of the original charge.

For many years, bentonite clay was the binding agent of choice in pelletizing operations for mineral ore concentrates. Use of bentonite as a binding agent produces balls or pellets having very good wet and dry strengths and good preheat strength. Also, bentonite provides a desired degree of moisture control.

CN 1153218 discloses an iron ore pellet compound additive comprising carboxymethyl cellulose, bentonite and a bore compound, i.e. boric acid or boron mud.

Use of bentonite does, however, have several disadvantages. Initially, bentonite adds to the silica content of the pellets. Higher amounts of silica are not desirable, because silica decreases the efficiency of blast furnace operations used in smelting the ore. The use of bentonite to form pellets of mineral ore concentrates can also add alkalis, which are oxides of, for example, sodium and potassium. The presence of alkalis in the blast furnace causes both the pellets and the coke to deteriorate and to form scabs on the furnace wall, which increases fuel consumption and decreases the productivity of the smelting operation.

Organic binders have proven an attractive alternative to bentonite, because organic binders do not increase the silica content of the ore and they impart physical and mechanical properties to the pellets comparable with those of bentonite. Organic binders also bum out during ball firing operations, thus causing an increase in the micro-porosity of the pellets. Accordingly, the pore volume and the surface/mass ratio of the formed pellets produced using organic binders are larger than those of pellets produced using bentonite. Due to the larger surface area and the increased permeability of pellets produced using organic binders, the reduction of metallic oxides such as iron oxide is more efficient than in the case of pellets prepared with bentonite.

Examples of some commonly used organic binders include polyacrylates, polyacrylamides, partially hydrolyzed polyacrylamides and copolymers thereof, methacrylamides, polymethacrylamides, cellulose derivatives such as alkali metal salts of carboxymethyl celluloses and carboxymethylhydroxyethyl celluloses, poly (ethylene oxide), guar gum, dairy wastes, starches, dextrins, wood related products, alginates, pectins, and the like. Popular inorganic binders include bentonite and hydrated lime.

U.S. Pat. No. 4,751,259 discloses compositions for agglomerating a wetted metal-containing ore including iron ore which comprises 10-45% by weight (wt%) of a water-in-oil emulsion of a water-soluble vinyl addition polymer, 55-90% by weight of a polysaccharide, 0.001-10% by weight of a water-soluble surfactant, and 0-15 wt% of borax. Such water-in-oil emulsions generally are expensive and may cause additional safety risks such as an increased fire hazard. Therefore, use of these emulsions in pelletizing processes generally is undesirable.

It is an object of the present invention to provide a process for producing iron oxide-containing pellets wherein the preheat strength of the agglomerated particles is improved over the preheat strength of particles comprising an organic binder.

### SUMMARY OF THE INVENTION

This object is achieved by a process for producing iron oxide-containing pellets by agglomerating fine iron ore particles in the presence of a binder system comprising a binder additive which is capable of improving the preheat strength of agglomerated particles.
More in particular, the present invention pertains to a process for producing iron oxide-containing pellets comprising agglomerating fine iron ore particles in the presence of a binder system to form green pellets, and heating said green pellets in stages to a final temperature in the range of about 1,275-1,350°C, preferably of about 1,295-1,325°C, characterized in that said binder system is substantially free of hydrophobic liquid and comprises
(i) an organic binder, and
(ii) a binder additive selected from boron-containing compounds, calcium fluoride, and combinations thereof,
with the proviso that the binder system does not contain bentonite.

The binder additive can be used with any known binder for agglomerating particles; it is compatible with and offers advantages to both organic and inorganic binders. Generally, the process of the invention improves the preheat strength of agglomerated particles. Addition of a binder additive is particularly advantageous if an organic binder is employed in the process. In such case, the preheat strength of the agglomerated particles may be improved to the level obtained when using an inorganic binder, such as bentonite. The inventive process may improve the preheat strength even beyond the levels obtained with bentonite. In addition, use of a binder additive in combination with an organic binder generally does not increase the silicon content of the iron oxide-containing pellets. Furthermore, the reducibility of the pellets generally is also improved.

A preferred process for producing iron oxide-containing pellets comprises the step of agglomerating fine iron ore particles in the presence of a binder system which comprises a cellulose ether and a binder additive selected from boron-containing compounds, calcium fluoride, and combinations thereof. The binder system is substantially free of hydrophobic liquid. It is further preferred that the cellulose ether is carboxymethyl cellulose or a salt thereof.

In accordance with the process of the invention, the binder additive can be employed in any amount. Even very low amounts of the binder additive are effective to improve the preheat strength of the agglomerate. For example, the amount of binder additive in the agglomerate is at least 0.01 wt%, preferably at least 0.02 wt%, most preferably at least 0.03 wt%, and generally at most 1.0 wt%, preferably at most 0.8 wt%, and most preferably at most 0.5 wt%, based on the total weight of the agglomerated particles.

The binder additive which is employed in the inventive process increases the binding strength of the pellets as they are transported from the preheat zone to the kiln. Preheat strengthening activity has been found for binder additives containing boron and/or calcium fluoride. Representative examples of boron-containing compounds include calcium borate, sodium borate, boric acid, boron nitride, boron oxide (B₂O₃). Also mineral compounds are included, such as ulexite, colemanite, Cadycal^{™}, and various borates (Gerstley, Laguna Murray's Gillespie, etc.). Cadycal^{™} is a calcium borate produced in California. It has a higher B₂O₃ concentration than colemanite, is lower in silica, and has a high concentration of calcium to give the pellets better fired properties as well.

Surprisingly, sodium borate (or sodium tetraborate, Na₂B₄O₇) improves both green (wet) pellet properties and preheat strength. It is also quite unexpected that these improvements are realized at lower addition rates than those required for other preheat strengthening compounds, such as calcium fluoride and colemanite, especially since sodium borate and colemanite both contain boron oxide.

Both natural and synthetic versions of the binder additive can be used. Generally, the boron- and calcium fluoride-containing compounds both improve preheat strength without adding any silica, which is known to have a negative effect on reducibility.

The preheat strengthening compound(s) or binder additive preferably is well dispersed in the particles to be agglomerated. For example, when using binder additives to increase the preheat strength of agglomerates of iron ore concentrate, it is possible to add a dry mixture of the preheat strengthening compound(s) to the iron ore concentrate. Thus, the binder additive can be added in the form of a dry powder. It is also possible to add the binder additive in the form of an aqueous suspension, aqueous solution, etc. In addition, the preheat strengthening additive can be added to the iron ore slurry before filtration.

If the binder and/or the binder additive are in particulate form (powder, suspension), the question of particle size is easily resolved, because the smaller it is, the easier uniform distribution is obtained. A preheat strengthening additive such as sodium tetraborate is a solid *per se.* However, its particle size does not really matter, because it will become dissolved in the water present while the agglomeration proceeds.

According to the method of the invention, a preheat strengthening additive is used alone or included with the binder in the agglomerated particles. The binder is organic. Many organic binders are polymers. Representative examples of these polymers include, but are not limited to:
(1) Water-soluble natural polymers, such as guar gum, starch, alginates, pectins, xanthan gum, dairy wastes, wood related products, lignin and the like;
(2) Modified natural polymers such as guar derivatives (e.g. hydroxypropyl guar, carboxymethyl guar, carboxymethylhydroxypropyl guar), modified starch (e.g. anionic starch, cationic starch), starch derivatives (e.g. dextrin) and cellulose derivatives, such as alkali metal salts of carboxymethyl cellulose, hydroxyethyl cellulose, hydroxypropyl cellulose, carboxymethylhydroxyethyl cellulose, methyl cellulose, lignin derivatives (e.g. carboxymethyl lignin), and the like; arid/or
(3) Synthetic polymers (e.g. polyacrylamides, such as partially hydrated polyacrylamides, methacrylamide and polymethacrylamide, polyacrylates and copolymers thereof; polyethylene oxides, and the like). The foregoing polymers may be used alone or in various combinations of two or more polymers.

Preferred polymers for use in the present invention are alkali metal salts of carboxymethyl cellulose. Any substantially water-soluble alkali metal salt of carboxymethyl cellulose may be used in this invention. The sodium salt is, however, preferred. Alkali metal salts of carboxymethyl cellulose, more particularly sodium carboxymethyl cellulose, are generally prepared from alkali cellulose and the respective alkali metal salt of monochloroacetic acid. Cellulose which is used in the manufacture of sodium carboxymethyl cellulose is generally derived from wood pulp or cotton linters, but may be derived from other sources such as sugar beet pulp, bagasse, rice hulls, bran, microbially-derived cellulose, and waste cellulose, e.g. shredded paper). The sodium carboxymethyl cellulose used in the present invention generally has a degree of substitution (the average number of carboxymethyl ether groups per repeating anhydroglucose chain unit of the cellulose molecule) of at least 0.4, preferably at least 0.5, and most preferably at least 0.6, and at most 1.5, more preferably at least 1.2, and most preferably at most 0.9. Generally, the average degree of polymerization of the cellulose fumish is from about 50 to about 4,000. Polymers having a degree of polymerization at the higher end of the range are preferred. It is more preferred to use sodium carboxymethyl cellulose having a Brookfield viscosity In a 1% aqueous solution of more than 2,000 cps (mPa·s) at 30 rpm, spindle #4. Still more preferred is sodium carboxymethyl cellulose having a Brookfield viscosity in a 1% aqueous solution of more than about 4,000 cps at 30 rpm, spindle #4.

A series of commercially available binders containing sodium carboxymethyl cellulose especially useful in the present invention is available from Akzo Nobel, under the trademark Perldur^{™}.

The manner in which the binder is added to the particulate material depends on the type of material being agglomerated, the type of binder being used, and the desired results. For example, the binder may be added as a dry powder, an aqueous suspension, an aqueous solution, an aqueous gel, an aqueous sol (colloidal system), etc.

The amount of binder employed also varies with the results desired. For example, for an organic binder, the amount of binder may range from 0.0025 to 0.5 wt.%, based on the weight of the particulate material with a preferred range being 0.005 to 0.2 wt.%.

The binder and the binder additive can be added to the particulate material together, one after the other, etc. This is not critical, so long as care Is taken that when the agglomeration takes place, the binder and the additive are present to perform.

The process of the invention is useful in agglomerating particles, particularly metal ores, such as iron ores, including ores that are generally difficult to process with known binder/additive systems. This invention is particularly well adapted for the agglomeration of materials containing iron, including iron ore deposits, ore tailings, cold and hot fines from a sinter process or aqueous suspensions of iron ore concentrates from natural sources or recovered from various processes. Iron ore or any of a wide variety of the following minerals may form a part of the material to be agglomerated: taconite, magnetite, hematite, limonite, goethite, siderite, franklinite, pyrite, chalcopyrite, chromite, ilmenite, and the like.

The size of the material being agglomerated varies according to the desired results. For example, when the particulate material being agglomerated is iron ore, 100% of the particles may be less than 80 mesh, preferably, 90% are less than 200 mesh, and most preferably, 75% are less than 325.mesh.

It is also envisaged to use conventional additives. These additives, their purpose and their use are known to the skilled person.

The process of the invention will be demonstrated in the following Examples.

### EXAMPLES

### Examples 1-7

In the following Examples green pellets of iron ore were prepared comprising various compounds in the amounts indicated in Table 1. The green pellets were prepared by agglomerating iron ore concentrate in the presence of a binder and a binder additive. The amounts of binder and/or additive (in percent by weight) shown in Table 1 are based on the total weight of the iron ore concentrate.
The iron ore concentrate employed in the Examples of Table 1 was obtained from Gulf Industrial Investment Company (GIIC), Bahrain. To this iron ore concentrate limestone and anthracite were added. This iron ore concentrate contains about 1 wt% of limestone and about 1 wt% of anthracite, calculated on the weight of the iron ore concentrate. In the context of this specification, when the amount of iron ore concentrate is mentioned, this includes the added limestone and anthracite.
The binder and additives were supplied by Akzo Nobel. The bentonite of Comparative Example 1 is Wyoming bentonite. Peridur 330 comprises sodium carboxymethyl cellulose and sodium carbonate. The binder additives are calcined colemanite, sodium tetraborate, calcium fluoride, and synthetic calcium borate.

**Table 1**

| | Binder | | Other additive | Binder Additive | | | |
|---|---|---|---|---|---|---|---|
| Comparative Example | Bentonite (wt%) | Peridur 330 (wt%) | NaOH (wt%) | Colemanite (wt%) | Sodium tetraborate (wt%) | Calcium fluoride (wt%) | Calcium borate (wt%) |
| 1 | 0.5 | | | | | | |
| 2 | | 0.04 | 0.015 | | | | |
| | | | | | | | |

| Example | | | | | | | |
|---|---|---|---|---|---|---|---|
| 1 | | 0.04 | 0.015 | 0.04 | | | |
| 2 | | 0.04 | 0.015 | | 0.04 | | |
| 3 | | 0.04 | 0.015 | | | 0.04 | |
| 4 | | 0.04 | 0.015 | 0.20 | | | |
| 5 | | 0.04 | 0.015 | | | 0.20 | |
| 8 | | 0.04 | 0.015 | | 0.20 | | |
| 7 | | 0.04 | 0.015 | | | | 0.20 |

The moisture content, drop number, wet and dry compressive strength of the obtained green pellets were measured.

### Wet drop number

The Wet drop number was determined by repeatedly dropping a green pellet having a size between 1.27 cm (1/2") and 1.11 cm (7/16") from a height of 0.46 m (18") onto a horizontally placed steel plate until a visible crack formed in the pellet surface. The number of times the pellet was dropped up to the point of fracture/cracking was determined. The average number of times averaged over 20 green pellets is referred to as the Wet drop number.

### Wet compressive strength

20 wet green pellets having a size of between 1.27 cm (1/2") and 1.11 cm (7/16") were stored in an airtight container. One by one the pellets were removed and placed in a standard measuring device in which a plunger of a scale was lowered onto the green pellet at a speed of 2.54 cm (1 inch) per 10 seconds. The maximum applied force at which the pellet cracked was determined. The average force averaged over 20 green pellets is referred to as the Wet compressive strength.

### Dry compressive strength

20 green pellets having a size of between 1.27 cm (1/2") and 1.11 cm (7/16") were dried in an oven at 105°C for a minimum of two hours. Following drying, the dried pellets were placed one by one in a standard measuring device in which a plunger of a scale was lowered onto the green pellet at a speed of 2.54 cm (1 inch) per 10 seconds. The maximum applied force at which the pellet cracked was determined. The average force averaged over 20 green pellets is referred to as the Dry compressive strength.

The values obtained for the above parameters are tabulated in the Table below.

**Table 2**

| Comparative Example | Moisture content (%) | Wet drop number | Wet compressive strength (kg) | Dry compressive strength (kg) |
|---|---|---|---|---|
| 1 | 8.4 | 5.7 | 1.32 | 3.86 |
| 2 | 8.5 | 2.9 | 0.91 | 1.91 |
| | | | | |
| Example | | | | |
| 1 | 8.5 | 3.1 | 0.82 | 1.86 |
| 2 | 8.1 | 3.6 | 1.09 | 2.54 |
| 3 | 8.4 | 5.0 | 1.04 | 2.13 |
| 4 | 8.4 | 4.1 | 1.18 | 1.54 |
| 5 | 8.4 | 4.8 | 1.27 | 2.04 |
| 6 | 8.3 | 8.5 | 1.36 | 3.58 |
| 7 | 8.4 | 5.1 | 1.13 | 1.59 |

Already when 0.04 wt% of sodium tetraborate or calcium fluoride is added to the green pellet, an increase in the wet drop number and the wet and the dry compressive strength is obtained compared to the green pellets of Comparative Example 2. Increasing the amount of binder to 0.20 wt% leads to a further improvement of the green pellet properties for all binder additives used. The green pellets of Example 6 even show an improved wet drop number and wet compressive strength compared to the green pellets containing bentonite (i.e. Comparative Example 1).

The obtained wet green pellets were fired in a "mini-basket" of green pellets (approx. 6.8 kg (15 lbs)), which was prepared in a batch bailing tire surrounded by previously fired pellets to reduce sample preparation and size. In order to dry them, the green pellets were first heated to 340°C (644 F), at which temperature they were kept for a period of 2 minutes and 23 seconds. Subsequently, the temperature of the pellets was raised to 399°C (750 F). At this temperature, the pellets were kept for another 2 minutes and 23 seconds. The pellets were then heated to 699°C (1,290 F) and kept at that temperature for 2 minutes and 23 seconds. Subsequently, the pellets were heated to 1,177°C (2,150 F). The pellets were kept at that temperature for a period of 5 minutes and 15 seconds. Finally, the pellets were quenched in nitrogen. The obtained pellets are referred to as "preheated pellets".

These preheated pellets were tested for compression strength and tumble strength according to the methods described below.

### Compressive strength of preheated pellet

20 pellets (preheated according to the above procedure) having a size of between 1.27 cm - (1/2") and 1.11 cm - (7/16") were placed one by one in a device in which a plunger of a scale was lowered onto the preheated pellet at a speed of 2.54 cm (1 inch) per 10 seconds. The maximum applied force at which the pellet cracked was determined. The average force averaged over 20 green pellets is referred to as the compressive strength.

It is noted that also the percentage (by weight) of pellets cracking at a pressure below 90.7 kg (200 lbs) was determined. This percentage is referred to as -90.7 kg "(-200lbs)".

### Tumble strength

The tumble strength was determined using two separate test methods. The first method involved placing 500 grams of preheated pellets inside a standard ISO Tumble Tester and rotating the pellet charge for 200 revolutions at 25 rotations per minute. This method is referred to as "500g "Mini Tumble"". The pellets were subsequently screened on a 0.64 cm (¼") screen to remove any chips or breakage that occurred in the Tumble Tester. The percentage of pellets (in percent by weight or wt%) retained was recorded. This percentage is referred to as "+1/4" AT° in the Table below. The percentage of fines (wt%) having a size of less than 32 mesh (referred to as "-32M" in the Table below) and the percentage of particles (wt%) with a size below 0.64 cm (¼ inch) but larger than 32 mesh (referred to as "-1/4" +32M" in the Table below) were also determined.

The second method referred to as "650g Tumble" involved placing 650 grams of preheated pellets in a small steel vessel inside a Linder reducibility apparatus. These pellets were rotated for 5 minutes at 25 rotations per minute. The pellets were subsequently screened on a 0.64 cm (¼") screen. The various percentages were determined as described above.

The values obtained with the above tests are shown in the Table below. It is noted that the values of the layers of pellets positioned lower in the mini-basket (referred to as "Bottom" in the Table) and of the higher-positioned layers of pellets (referred to as "Top" in the Table) were separately determined and are shown in Table 3.

**Table 3**

| | Pellet compression | | | 500g "Mini Tumble" | | | 650g Tumble | | |
|---|---|---|---|---|---|---|---|---|---|
| Comp. Ex. | | Comp. strength (kg) | -90.7 kg (%) | +1/4" | -1/4"+32M | -32M | +1/4" | -1/4'+32M | -32M |
| 1 | Top | 226 | 1 | 97.9 | 0 | 2.1 | 95.2 | 0.1 | 4.7 |
| | Bottom | 206 | 1 | 97.9 | 0 | 2.1 | 95.0 | 0.1 | 4.9 |
| 2 | Top | 197 | 16 | 97.1 | 0 | 2.9 | 82.0 | 1.4 | 16.6 |
| | Bottom | 192 | 21 | 97.1 | 0 | 2.9 | 82.1 | 1.7 | 16.2 |
| | | | | | | | | | |
| Ex. | | | | | | | | | |
| 1 | Top | 122 | 12 | 96.7 | 0.1 | 3.2 | 81.3 | 1.0 | 17.7 |
| | Bottom | 106 | 24 | 96.7 | 0.3 | 3.0 | 82.8 | 1.6 | 15.6 |
| 2 | Top | 145 | 5 | 97.6 | 0 | 2.4 | 82.7 | 0.7 | 16.6 |
| | Bottom | 124 | 6 | 98.0 | 0 | 2.0 | 88.4 | 0.9 | 10.7 |
| 3 | Top | 126 | 11 | 97.3 | 0 | 2.7 | 81.1 | 1.4 | 17.5 |
| | Bottom | 111 | 15 | 97.3 | 0 | 2.7 | 79.3 | 2.3 | 18.4 |
| 4 | Top | 168 | 2 | 97.4 | 0 | 2.6 | 92.6 | 0.2 | 7.2 |
| | Bottom | 179 | 0 | 98.1 | 0 | 1.9 | 93.0 | 0.2 | 6.8 |
| 5 | Top | 114 | 14 | 96.9 | 0 | 3.1 | 80.3 | 0.8 | 18.9 |
| | Bottom | 119 | 8 | 97 | 0 | 3 | 82.6 | 0.9 | 16.5 |
| 6 | Top | 175 | 5 | 98.5 | 0 | 1.5 | 92.5 | 0.6 | 6.8 |
| | Bottom | 161 | 3 | 98.7 | 0 | 1.3 | 94.0 | 0.5 | 5.5 |
| 7 | Top | 164 | 2 | 97.2 | 0 | 2.8 | 89.2 | 0.3 | 10.5 |
| | Bottom | 170 | 1 | 97.9 | 0 | 2.1 | 93.9 | 0.1 | 6 |

When only a small amount of binder additive is added to the iron ore pellet, the values for compressive strength, -90.7 kg (-2001bs), and tumble strength of the preheated pellet are similar to or exhibit small improvements over the preheated pellet of Comparative Example 2. The properties of the pellets are further improved if the pellets contain 0.20 wt% of the binder additive. The properties are most improved when sodium tetraborate is used as binder additive (see Example 6). In this case the pellet properties are almost similar to the properties of the preheated pellets of Comparative Example 1.

For the preheated pellets the reducibility and the metallization were determined. The results are presented in Table 4. In the Table below are listed the total amount of iron (in wt%) in the pellets prior to reduction (referred to as "Feₜₒₜ(1)"). the percentage (wt%) of FeO, the reducibility, and the total amount of iron (wt%) after reduction (referred to as ''Feₜₒₜ(2)"), the percentage of iron present in the metallic form (referred to as "Fe_{metall.}"), and the metallization.
Reduction of the iron ore pellets was performed at a temperature of 850°C.

**Table 4**

| Comp. Example | Feₜₒₜ (%) | FeO (%) | Reducibility (%) | Feₜₒₜ | Fe_{metal.} (%) | Metallization (%) |
|---|---|---|---|---|---|---|
| 1 | 67.6 | <0.1 | 96.0 | 94.0 | 88.2 | 93.8 |
| 2 | 68.2 | <0.1 | 95.0 | 94.4 | 88.4 | 93.6 |
| | | | | | | |

| Example | | | | | | |
|---|---|---|---|---|---|---|
| 1 | 68.2 | <0.1 | 99.0 | 95.8 | 95.1 | 99.3 |
| 5 | 67.5 | <0.1 | 95.2 | 95.3 | 92.4 | 97.0 |
| 6 | 68.0 | <0.1 | 97.8 | 96.0 | 95.2 | 99.2 |

The reducibility of the pellets of Examples 1, 5 and 6 is higher than for Comparative Example 2. Moreover, the pellets of Examples 1 and 6 reveal an improvement in reducibility over pellets containing bentonite (Comparative Example 1). The metallization is higher for all the Examples shown in the Table as compared to the Comparative Examples.

### Examples 8 and 9

More experiments were performed in order to demonstrate the influence of the amount of calcium fluoride on the properties of the pellets formed. In Table 5 the compositions of the green pellets are shown. The green pellets were prepared by agglomerating iron ore concentrate in the presence of a binder and a binder additive. The iron ore, bentonite, Peridur 300, and calcium fluoride are the same as those described above for Examples 1-7. Perispray^{™} was obtained from Akzo Nobel and comprises sodium carboxymethyl cellulose and sodium hydroxide in an aqueous solution. The amounts shown in the Table are based on the total weight of the iron ore concentrate.

**Table 5**

| Comp. Example | Iron ore (wt%) | Bentonite (wt%) | Peridur 300 (wt%) | Perispray (wt%) | CaF₂ (wt%) |
|---|---|---|---|---|---|
| 3 | 99.40 | 0.6 | 0 | 0 | 0 |
| 4 | 99.945 | 0 | 0.04 | 0.15 | 0 |
| | | | | | |

| Example | | | | | |
|---|---|---|---|---|---|
| 8 | 99.845 | 0 | 0.04 | 0.15 | 0.10 |
| 9 | 99.745 | 0 | 0.04 | 0.15 | 0.20 |

The moisture content, the wet drop number, the wet compressive strength and the dry compressive strength of the obtained green pellets were determined according to the methods described above. The results are shown in Table 6.

**Table 6**

| Comp. Example | Moisture (%) | Wet drop number | Wet compressive strength (lbs) | Dry compressive strength (kg) |
|---|---|---|---|---|
| 3 | 7.44 | 4.8 | 2.25 | 4.35 |
| 4 | 7.51 | 3.4 | 1.75 | 2.28 |
| | | | | |

| Example | | | | |
|---|---|---|---|---|
| 8 | 7.76 | 5.6 | 1.94 | 2.32 |
| 9 | 7.72 | 5.6 | 2.02 | 2.60 |

From Table 6 it can be deduced that a larger amount of calcium fluoride in the pellets increases the wet and dry compressive strengths. It is also shown that the wet drop number as well as the wet and dry compressive strengths increase with respect to Comparative Example 4. The wet drop number of Examples 8 and 9 even exceeds the number of the bentonite-containing green pellet (Comparative Example 1).

The wet green pellets having a size of 12-13 mm were exposed to the temperature profile described above for Examples 1-7. The compressive strength of the preheated pellets was determined and is shown in Table 7. The wet green pellets were placed in a mini-basket and arranged in ten layers. In the Table, layer 1 refers to the uppermost layer in the mini-basket and layer 10 refers to the bottom layer.

**Table 7**

| Compressive strength (kg) | | | | |
|---|---|---|---|---|
| Layer | Comp.Ex. 3 | Comp.Ex. 4 | Example 8 | Example 9 |
| 1 | 71 | 60 | 66 | 103 |
| 2 | 82 | 63 | 65 | 86 |
| 3 | 78 | 53 | 55 | 86 |
| 4 | 73 | 48 | 49 | 70 |
| 5 | 56 | 43 | 47 | 59 |
| 6 | 46 | 35 | 36 | 53 |
| 7 | 43 | 26 | 29 | 39 |
| 8 | 36 | 22 | 24 | 32 |
| 9 | 35 | 20 | 23 | 27 |
| 10 | 32 | 18 | 19 | 23 |

The compressive strengths of the preheated pellets of Examples 8 and 9 are higher for all layers than those of the pellets of Comparative Example 2. The compressive strengths of the pellets positioned in the first (top) layers obtained for Examples 8 and 9 are even higher than for corresponding pellets of the bentonite-containing pellets. Table 7 further demonstrates that a higher amount of calcium fluoride will improve the compressive strengths of pellets irrespective of the layer in which they are positioned.

Furthermore, the 500g Mini Tumble test was performed to determine the tumble strength. This tumble strength was determined for the top five layers (layers 1-5) in the mini-basket and for the bottom five layers for each Example. They are expressed in percentage by weight of pellets having a size above 6.30 mm (referred to as "+ 6.30 mm"), calculated on the initial weight of preheated pellets. The percentage by weight of fine particles having a size smaller than 0.50 mm (referred to as "- 0.50 mm"), calculated on the Initial weight of preheated pellets, was also determined. The results are shown in the Table below.

**Table 8**

| Tumble strength | | | |
|---|---|---|---|
| Comp. Example | Layers | +6.30 mm (wt%) | -0.50 mm (wt%) |
| 3 | 1-5 | 98.52 | 1.48 |
| | 6-10 | 96.36 | 3.64 |
| 4 | 1-5 | 97.72 | 2.2 |
| | 6-10 | 94.08 | 5.56 |
| | | | |

| Example | | | |
|---|---|---|---|
| 8 | 1-5 | 98.2 | 1.64 |
| | 6-10 | 95.8 | 4.12 |
| 9 | 1-5 | 98.96 | 1.04 |
| | 6-10 | 97.64 | 2.30 |

Table 8 shows that addition of 0.10 wt% of calcium fluoride to the iron ore pellets already gives an improvement in tumble strength (i.e. a larger percentage of particles having a size exceeding 6.30 mm, and less fines (smaller than 0.50 mm)) compared to the pellets without calcium fluoride (Comparative Example 2), and is almost similar to the values obtained for Comparative Example 1. The Table further reveals that the amount of fines can be further reduced if 0.20 wt% calcium fluoride is added to the pellet, and also the amount of particles larger than 6.30 mm can be increased. The tumble strength of the latter is even improved beyond the values for the bentonite-containing Example. The above was observed for both layers 1-5 and layers 6-10.

## Claims

1. A process for producing iron oxide-containing pellets comprising agglomerating fine iron ore particles in the presence of a binder system to form green pellets, and heating said green pellets in stages to a final temperature in the range of about 1,275-1,350°C, **characterized in that** said binder system is substantially free of hydrophobic liquid and comprises
(i) an organic binder, and
(ii) a binder additive selected from boron-containing compounds, calcium fluoride, and combinations thereof,
with the proviso that the binder system does not contain bentonite.

2. The process according to claim 1 wherein the boron-containing compound is selected from boron oxide, calcium borate, sodium borate, boric acid, and boron nitride.

3. The process of claim 1 or 2 wherein the boron-containing compound is sodium borate.

4. The process according to any one of the preceding claims wherein the binder system comprises a cellulose ether as organic binder.

5. The process according to any one of the preceding claims wherein the binder system comprises a carboxymethyl cellulose as organic binder.

## Patentansprüche

1. Verfahren zur Herstellung von eisenoxidhaltigen Pellets, umfassend das Agglomerieren von feinen Eisenerzteilchen in Gegenwart eines Bindemittelsystems unter Bildung von Grünpellets und Erhitzen der Grünpellets in Stufen auf eine Endtemperatur im Bereich von etwa 1275 bis 1350 °C, **dadurch gekennzeichnet, dass** das Bindemittelsystem im Wesentlichen frei von hydrophober Flüssigkeit ist und Folgendes umfasst:
(i) ein organisches Bindemittel; und
(ii) ein Bindemittel-Additiv, das aus borhaltigen Verbindungen, Calciumfluorid und Kombinationen davon ausgewählt ist;
mit der Maßgabe, dass das Bindemittelsystem keinen Bentonit enthält.

2. Verfahren gemäß Anspruch 1, wobei die borhaltige Verbindung aus Boroxid, Calciumborat, Natriumborat, Borsäure und Bornitrid ausgewählt ist.

3. Verfahren gemäß Anspruch 1 oder 2, wobei es sich bei der borhaltigen Verbindung um Natriumborat handelt.

4. Verfahren gemäß einem der vorstehenden Ansprüche, wobei das Bindemittelsystem einen Celluloseether als organisches Bindemittel umfasst.

5. Verfahren gemäß einem der vorstehenden Ansprüche, wobei das Bindemittelsystem eine Carboxymethylcellulose als organisches Bindemittel umfasst.

## Revendications

1. Procédé de production de pastilles contenant de l'oxyde de fer comprenant l'agglomération de fines particules de minerai de fer en présence d'un système de liant pour former des pastilles crues, et le chauffage desdites pastilles crues par étapes jusqu'à une température finale dans la plage d'environ 1 275°C à 1 350°C, **caractérisé en ce que** ledit système de liant est substantiellement dépourvu de liquide hydrophobe et comprend :
(i) un liant organique, et
(ii) un additif pour liant choisi parmi les composé contenant du bore, le fluorure de calcium, et les combinaisons de ceux-ci,
à condition que le système de liant ne contiennent pas de bentonite.

2. Procédé selon la revendication 1, dans lequel le composé contenant du bore est choisi parmi l'oxyde de bore, le borate de calcium, le borate de sodium, l'acide borique et le nitrure de bore.

3. Procédé selon la revendication 1 ou 2, dans lequel le composé contenant du bore est le borate de sodium.

4. Procédé selon l'une quelconque des revendications précédentes, dans lequel le système de liant comprend un éther de cellulose en tant que liant organique.

5. Procédé selon l'une quelconque des revendications précédentes, dans lequel le système de liant comprend une carboxyméthylcellulose en tant que liant organique.
